# EUROPEAN PATENT SPECIFICATION

(11) **EP 2 878 487 B1**
(45) Date of publication and mention of the grant of the patent: **13.09.2017**
(21) Application number: 14186940.4
(22) Date of filing: 30.09.2014
(51) Int. Cl.: B60Q 1/068, B62J 6/02

(54) **Saddle-ride type vehicle**
Fahrzeug mit Sattel
Véhicule avec selle

(30) Priority: 29.10.2013 JP 2013224315
(43) Date of publication of application: 03.06.2015
(73) Proprietor: Yamaha Hatsudoki Kabushiki Kaisha, Iwata-shi, Shizuoka 438-8501 (JP)
(72) Inventor: Suzuki, Yoshimasa, Iwata-shi, Shizuoka 4388-501 (JP)
(74) Representative: Grünecker Patent- und Rechtsanwälte PartG mbB

(56) References cited:
- EP-A1- 0 646 495
- EP-A1- 2 050 665
- EP-A2- 0 887 227
- EP-A2- 2 028 413

## Description

### Technical Field

The present invention relates to a saddle-ride type vehicle.

### Background Art

A well-known type of optical axis adjusting mechanism for a headlight embedded in a saddle-ride type vehicle is configured to change the gradient of a light source or a reflector by turning an optical axis adjusting screw mounted to the headlight. Two methods have been proposed for turning the optical axis adjusting screw. One is a method of turning the optical axis adjusting screw by turning a dial. The dial is coupled to the optical axis adjusting screw, and is installed in a position easily accessible by a rider. The other is a method of turning the optical axis adjusting screw by turning a tool such as a screwdriver. In adjusting the optical axis, the tool is inserted from outside and is fitted to the optical axis adjusting screw.

The latter method does not require a component for exclusively adjusting the optical axis and a space for installing the component. Thus, the latter method is advantageous in weight reduction and cost reduction in comparison with the former method. For example, an optical axis adjusting device for a motorcycle, described in Japan Examined Patent Application Publication No. JP-B-H06-53472, includes an aperture bored through the front wall of a storage box disposed rearward of a headlight so as to enable a tool to be inserted therethrough. A saddle-type ride vehicle according to the preamble of claim 1 is known from EP 0 646 495.

### SUMMARY OF INVENTION

### Technical Problem

Incidentally, components related to a handle are preferably disposed closely to the center axis of a steering shaft inserted into a head pipe in order to enhance brisk handling as much as possible.

However, when disposed closely to the center axis of the steering shaft, the headlight is disposed adjacently to the head pipe. Accordingly, the space on the back side of the headlight is reduced, and a tool becomes likely to interfere with the vehicle body. Thus, it is not easy to reliably produce a space on the back side of the headlight so as to enable a tool to be inserted therethrough (the space will be hereinafter referred to as "a tool path"). On the other hand, when components related to the headlight are densely disposed, clearances among the respective components are reduced and/or the respective components overlap with each other. Thus, it becomes difficult to reliably produce the tool path.

It is an object of the present invention to reliably produce a tool path for adjusting an optical axis in a saddle-ride type vehicle even when the space on the back side of a headlight is small or when components related to the headlight are densely disposed.

### Solution to Problem

The object of the present invention is achieved by a saddle-ride type vehicle according to claim 1. A saddle-ride type vehicle according to an aspect of the present teaching includes a frame, a steering shaft, a front fork, a front wheel and a headlight. The frame includes a head pipe. The steering shaft is rotatably supported by the head pipe. The front fork is coupled to the steering shaft. The front fork includes a pair of tubular bodies and a bracket coupling the pair of tubular bodies. The front wheel is rotatably supported by the front fork. The headlight is supported by the front fork. The headlight includes a light emitting portion and an optical axis adjusting screw for adjusting an optical axis of the light emitting portion. Further, the optical axis adjusting screw includes a head portion to be disposed on a back-side portion of the headlight. Yet further, the bracket includes a through hole bored toward the head portion of the optical axis adjusting screw.

In the structure, a tool path is produced so as to extend to the head portion of the optical axis adjusting screw through the through hole of the bracket. Thus, the tool path for adjusting the optical axis can be reliably produced even when the space on the back side of the headlight is small or when components related to the headlight are densely disposed.

Preferably, the front fork includes an upper bracket and a lower bracket. The upper bracket couples the pair of tubular bodies. The lower bracket couples the pair of tubular bodies and is disposed lower than the upper bracket. Further preferably, the bracket including the through hole is the lower bracket. In the structure, it is possible to make the through hole less stand out in the appearance of the saddle-ride type vehicle.

Preferably, the lower bracket is located under the head portion of the optical axis adjusting screw. Further preferably, the through hole penetrates through the lower bracket in an up-and-down direction. In the structure, a tool can be easily brought close to the head portion of the optical axis adjusting screw from below through the through hole of the lower bracket.

Preferably, the steering shaft is disposed so as to tilt such that an upper portion thereof is located rearward of a lower portion thereof. Further preferably, the lower bracket is disposed such that a normal extending from an upper surface thereof is oriented in a tilting direction of the steering shaft. Yet further preferably, the through hole penetrates through the lower bracket in the up-and-down direction so as to tilt with respect to the normal extending from the upper surface of the lower bracket. In the structure, even when the upper surface of the lower bracket is disposed so as to tilt with respect to the up-and-down direction, a tool can be easily brought close to the head portion of the optical axis adjusting screw from below through the through hole of the lower bracket.

Preferably, the head portion of the optical axis adjusting screw overlaps with the front fork in a vehicle side view. In the structure, it is difficult to bring a tool close to the head portion of the optical axis adjusting screw from a lateral side. However, the optical axis is easily adjustable by bringing the tool close to the head portion of the optical axis adjusting screw through the through hole of the lower bracket. Therefore, the tool path for adjusting the optical axis can be reliably produced even when the head portion overlaps with the front fork in the vehicle side view due to the arrangement of the headlight located adjacently to the center axis of the steering shaft.

Preferably, the through hole is located laterally to a center of the bracket in a vehicle width direction. In the structure, the through hole is more easily accessible than that bored in the center of the bracket in the vehicle width direction. Thus, a tool can be easily inserted through the through hole. As a result, the tool can be easily brought close to the head portion of the optical axis adjusting screw.

Preferably, the through hole is located forward of a center of the bracket on a cross-section including an axis of the through hole among cross-sections arranged perpendicularly to the vehicle width direction. In the structure, even when a component such as an engine is disposed rearward of the bracket, a large space can be reliably produced between the component and the through hole. Thus, workability of adjusting the optical axis can be enhanced.

Preferably, the bracket includes a thick portion and a thin portion having a thickness less than a thickness of the thick portion. Further preferably, the through hole penetrates through the thin portion. In the structure, even when the bracket includes the through hole, degradation in strength of the bracket can be inhibited.

Preferably, the saddle-ride type vehicle further includes a fuel tank disposed rearward of the head pipe. In the structure, a tool can be easily brought close to the head portion of the optical axis adjusting screw through the through hole of the bracket, even when it is difficult to access the head portion of the optical axis adjusting screw from behind the headlight due to the fuel tank as an obstacle blocking access to the head portion.

Preferably, the headlight is disposed adjacently to the head pipe such that the back-side portion of the headlight is located between portions of the front fork. In the structure, brisk handling can be enhanced by disposing the headlight adjacently to the head pipe.

Preferably, the steering shaft is disposed so as to tilt such that the upper portion thereof is located rearward of the lower portion thereof. Further preferably, the headlight is disposed adjacently to the steering shaft such that the headlight is at least partially located over the steering shaft. In the structure, brisk handling can be enhanced by disposing the headlight adjacently to the steering shaft.

Preferably, a relation La < 2Lb is established where in a direction perpendicular to a tilting direction of the front fork in the vehicle side view, La is defined as a distance between a front end edge of the bracket and a tangent that touches a front surface of the headlight and extends in parallel to the tilting direction of the front fork, and Lb is defined as a distance between the front end edge of the bracket and a center axis of the steering shaft. In the structure, brisk handling can be enhanced by disposing the headlight adjacently to the center axis of steering shaft.

Preferably, the headlight includes a guide portion for guiding a tool inserted through the through hole to the head portion. Further preferably, the guide portion is disposed between the through hole and the head portion. In the structure, the tool is guided by the guide portion and can be easily brought close to the head portion.

### Advantageous Effects of Invention

According to the present invention, a tool path for adjusting an optical axis can be reliably produced in a saddle-ride type vehicle even when the space on the back side of a headlight is small or when components related to the headlight are densely disposed.

### BRIEF DESCRIPTION OF THE DRAWINGS

Referring now to the attached drawings which form a portion of this original disclosure:
FIG 1 is a side view of a saddle-ride type vehicle;
FIG 2 is a partial front view of the saddle-ride type vehicle;
FIG 3 is a side view of a headlight;
FIG 4 is a cross-sectional view of FIG 2 taken along a line IV-IV;
FIG 5 is a cross-sectional view of FIG 2 taken along a line V-V;
FIG 6 is a rear view of the headlight;
FIG 7A is an enlarged rear view of a first optical axis adjusting screw and the vicinity thereof;
FIG 7B is an enlarged cross-sectional view of the first optical axis adjusting screw and the vicinity thereof;
FIG 8 is a obliquely rear view of a headlight unit and the vicinity thereof in adjusting an optical axis; and
FIG 9 is an enlarged partial side view of the saddle-ride type vehicle.

### DETAILED DESCRIPTION OF THE EMBODIMENTS

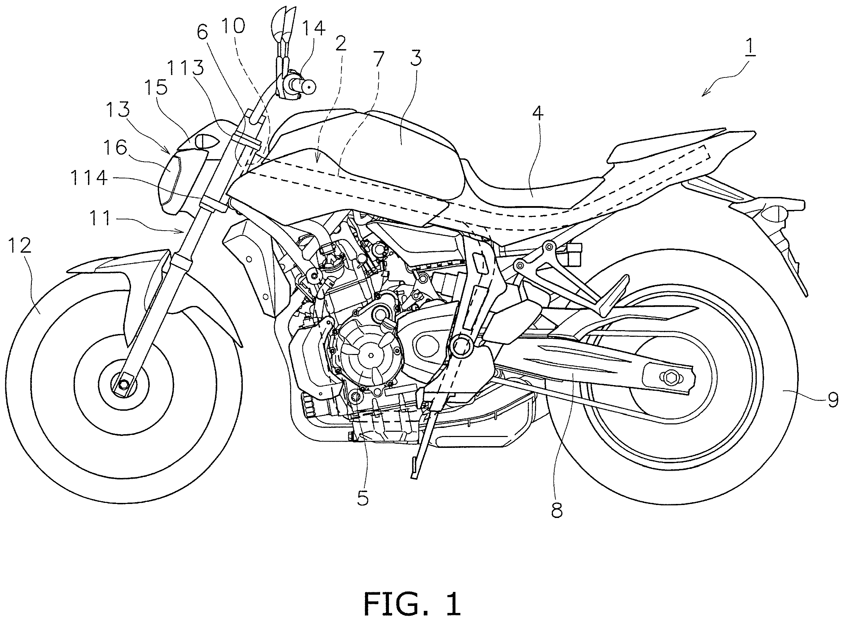

With reference to the attached drawings, explanation will be hereinafter made for a saddle-ride type vehicle 1 according to an exemplary embodiment. FIG 1 is a side view of the saddle-ride type vehicle 1. The saddle-ride type vehicle 1 is a motorcycle. The saddle-ride type vehicle 1 includes a frame 2, a fuel tank 3, a seat 4 and an engine 5.

The frame 2 includes a head pipe 6 and a main frame 7. The head pipe 6 is disposed so as to tilt such that the upper portion thereof is located rearward of the lower portion thereof. The main frame 7 is disposed rearward of the head pipe 6, while being connected to the head pipe 6.

The fuel tank 3 is disposed rearward of the head pipe 6. The fuel tank 3 is also disposed over the main frame 7. The seat 4 is disposed rearward of the fuel tank 3. The seat 4 is also disposed over the main frame 7. The engine 5 is disposed under the fuel tank 3. The engine 5 is also supported by the main frame 7. It should be noted that directional terms "front", "rear", "right" and "left" and their related terms refer to directions seen from a rider seated on the seat 4 in the present exemplary embodiment.

The saddle-ride type vehicle 1 includes a rear arm 8 and a rear wheel 9. The rear arm 8 is pivotably attached to the main frame 7. The rear wheel 9 is disposed rearward of the engine 5, and is supported by the main frame 7 through the rear arm 8.

The saddle-ride type vehicle 1 includes a steering shaft 10, a front fork 11, a front wheel 12 and a headlight unit 13. The steering shaft 10 is inserted into an aperture of the head pipe 6, and is thus rotatably supported by the head pipe 6. The steering shaft 10 is disposed so as to tilt such that the upper portion thereof is located rearward of the lower portion thereof.

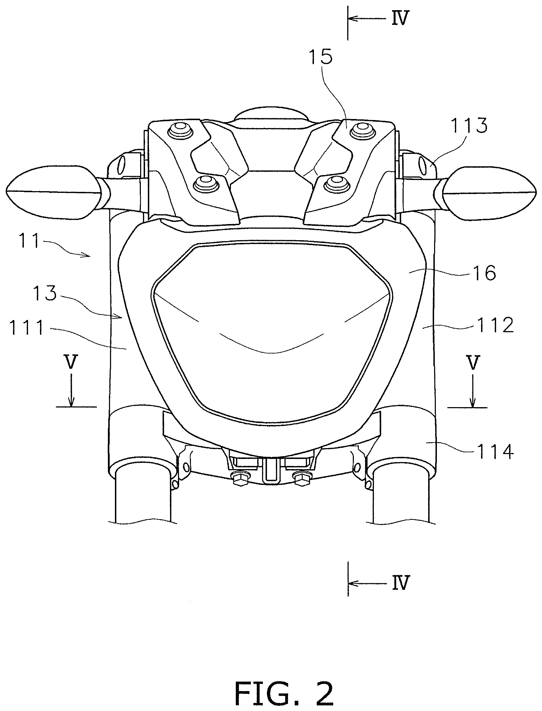

The front fork 11 is coupled to the steering shaft 10. The front wheel 12 is rotatably supported by the lower portion of the front fork 11. FIG 2 is a partial front view of the saddle-ride type vehicle 1. As illustrated in FIG 2, the front fork 11 includes a pair of tubular bodies 111 and 112, an upper bracket 113 and a lower bracket 114.

The upper bracket 113 connects the pair of tubular bodies 111 and 112. When described in detail, the upper bracket 113 couples the upper end of the steering shaft 10 and the pair of tubular bodies 111 and 112. The lower bracket 114 couples the pair of tubular bodies 111 and 112, and is disposed lower than the upper bracket 113. When described in detail, the lower bracket 114 couples the lower end of the steering shaft 10 and the pair of tubular bodies 111 and 112. As illustrated in FIG 1, the lower bracket 114 is positioned so as to direct a normal extending from the upper surface thereof along the tilting direction of the steering shaft 10. The front end edge of the upper bracket 113 is located rearward of the front end edge of the lower bracket 114. The upper end of the steering shaft 10 and the upper end of the front fork 11 are coupled to a handlebar 14 through the upper bracket 113.

The headlight unit 13 is supported by the front fork 11. As illustrated in FIGS. 1 and 2, the headlight unit 13 includes a headlight top cover 15 and a headlight 16. The headlight top cover 15 is disposed over the headlight 16.

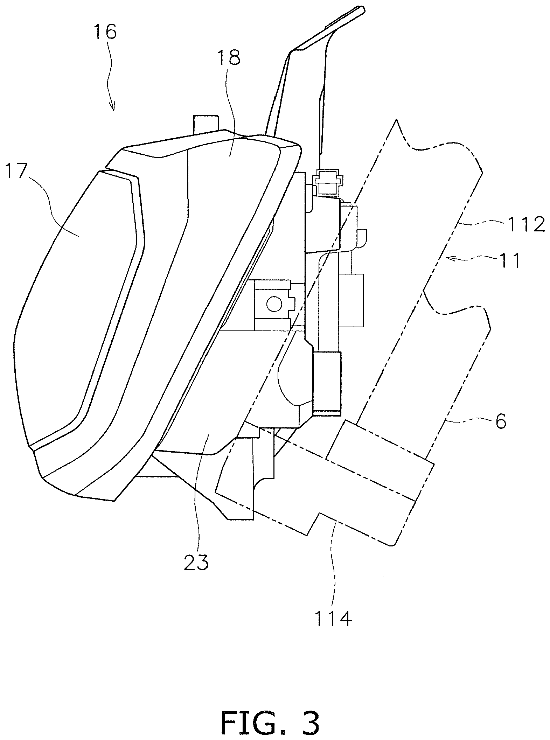

FIG 3 is a side view of the headlight 16. It should be noted that in FIG 3, the positions of the head pipe 6 and the front fork 11 are depicted with dashed two-dotted lines. As illustrated in FIG 3, the headlight 16 includes a lens portion 17, a headlight cover 18 and a casing 23. The lens portion 17 is made of a transparent material and has light transmission properties. The lens portion 17 is attached to the headlight cover 18. The headlight cover 18 covers the circumference of the lens portion 17. The headlight cover 18 is attached to the casing 23. The lens portion 17, the headlight cover 18 and the casing 23 form a chassis for accommodating a light emitting portion 19 to be described.

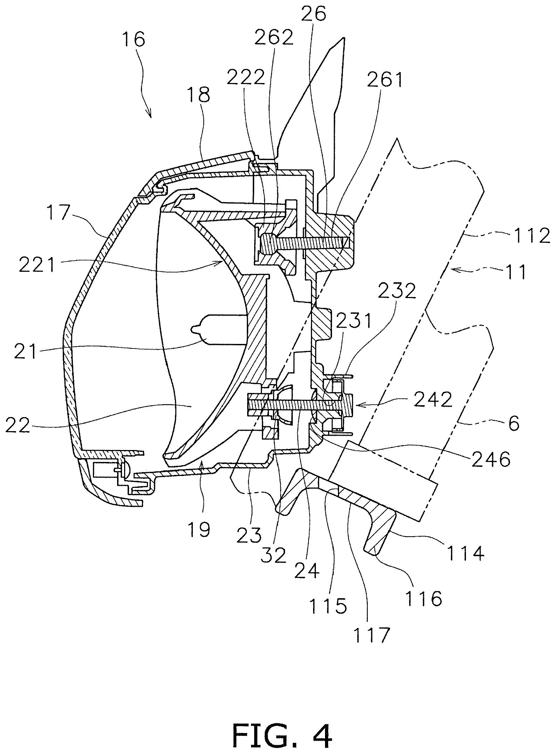

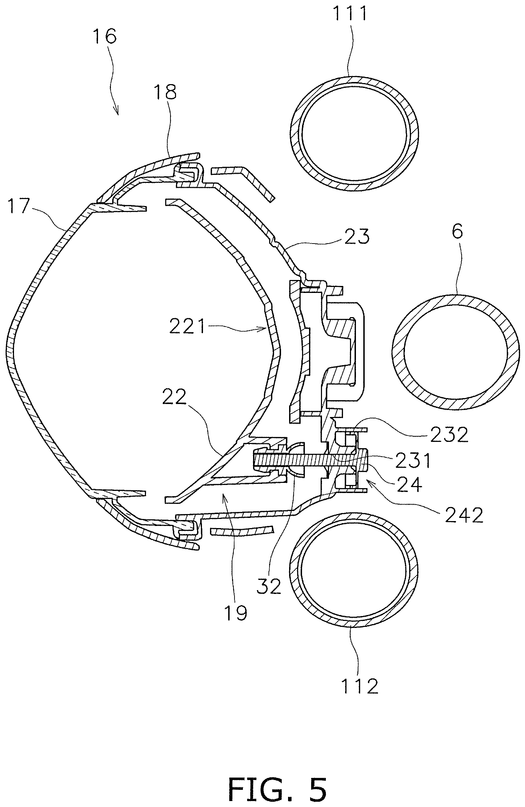

FIG 4 is a cross-sectional view of FIG 2 taken along a line IV-IV. FIG 5 is a cross-sectional view of FIG 2 taken along a line V-V. As illustrated in FIG 4, the headlight 16 includes the light emitting portion 19. The light emitting portion 19 includes a headlight bulb 21 and a reflector 22. The headlight bulb 21 is attached to the reflector 22. The reflector 22 includes a reflective surface 221 on the front surface thereof. The reflective surface 221 has a backwardly concave shape. The reflective surface 221 is made in the form of a mirror surface and curves so as to forwardly reflect light from the headlight bulb 21.

As illustrated in FIG 3, the headlight 16 is located adjacently to the head pipe 6 so as to be at least partially located over the head pipe 6. The headlight 16 is located adjacently to the head pipe 6 such that the back-side portion of the headlight 16 is located between the pair of tubular bodies 111 and 112 of the front fork 11. When described in detail, the rear portion of the casing 23 is located immediately over the head pipe 6. Further, the rear portion of the casing 23 is located between the pair of tubular bodies 111 and 112 of the front fork 11.

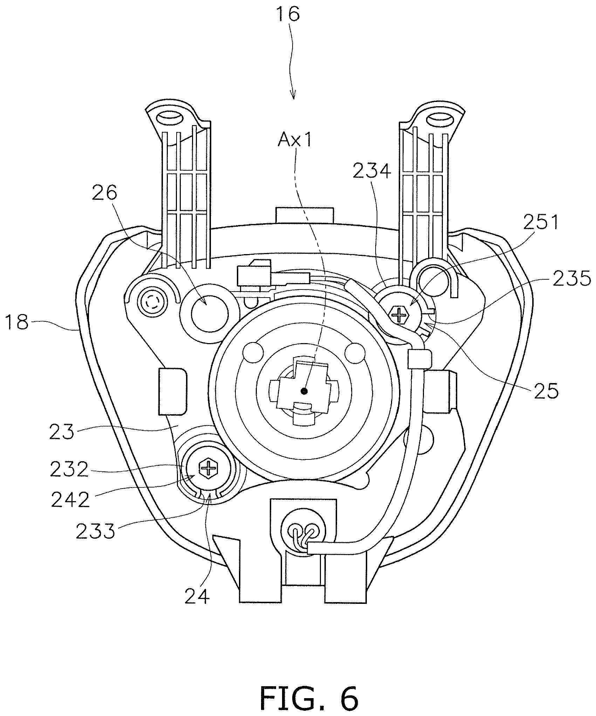

FIG 6 is a rear view of the headlight 16. As illustrated in FIG 6, the headlight 16 includes a first optical axis adjusting screw 24, a second optical axis adjusting screw 25 and a fulcrum portion 26 in order to adjust the optical axis of the light emitting portion 19. The first optical axis adjusting screw 24 is configured to adjust the optical axis of the light emitting portion 19 in the up-and-down direction. The second optical axis adjusting screw 25 is configured to adjust the optical axis of the light emitting portion 19 in the right-and-left direction. The fulcrum portion 26 serves as a fulcrum in adjusting the optical axis of the light emitting portion 19 by either the first optical axis adjusting screw 24 or the second optical axis adjusting screw 25.

In a rear view of the headlight 16, the first optical axis adjusting screw 24 and the second optical axis adjusting screw 25 are disposed symmetrically to each other about a center axis Ax1 of the headlight bulb 21. When described in detail, the first optical axis adjusting screw 24 is disposed lower than the center axis Ax1 of the headlight bulb 21 The second optical axis adjusting screw 25 is disposed higher than the center axis Ax1 of the headlight bulb 21. Further, the first optical axis adjusting screw 24 is disposed leftward of the center axis Ax1 of the headlight bulb 21, whereas the second optical axis adjusting screw 25 is disposed rightward of the center axis Ax1 of the headlight bulb 21. On the other hand, the fulcrum portion 26 is disposed higher than the center axis Ax1 of the headlight bulb 21. Further, the fulcrum portion 26 is disposed leftward of the center axis Ax1 of the headlight bulb 21. Yet further, the fulcrum portion 26 is located immediately above the first optical axis adjusting screw 24, while being located immediately lateral to the second optical axis adjusting screw 25.

As illustrated in FIG 4, the casing 23 includes a support aperture 231 for supporting the first optical axis adjusting screw 24. The first optical axis adjusting screw 24 is inserted into the support aperture 231. A nut 32 is mounted to the back-side portion of the reflector 22 of the light emitting portion 19 in order to support the first optical axis adjusting screw 24. The first optical axis adjusting screw 24 is screwed into the nut 32.

The fulcrum portion 26 includes a support shaft portion 261 and a support head portion 262. The support head portion 262 has a spherical shape and has a diameter greater than that of the support shaft portion 261. The tip of the support shaft portion 261 is fixed to the casing 23. The support head portion 262 is turnably fitted into a support portion 222 mounted to the light emitting portion 19.

When the first optical axis adjusting screw 24 is turned about the center axis thereof, the distance between the casing 23 and the nut 32 is changed. Thus, the light emitting portion 19 is caused to pivot about the support head portion 262, and the optical axis of the light emitting portion 19 is changed up and down.

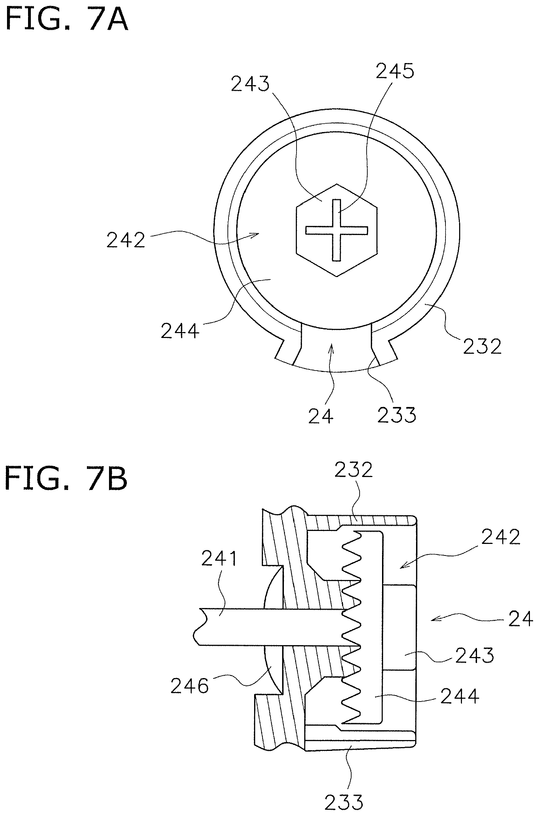

FIG 7A is an enlarged rear view of the first optical axis adjusting screw 24 and the vicinity thereof. FIG 7B is an enlarged cross-sectional view of the first optical axis adjusting screw 24 and the vicinity thereof. It should be noted that in FIG 7B, the first optical axis adjusting screw 24 is depicted not in a cross-sectional view but in a side view for easy understanding. The first optical axis adjusting screw 24 includes a first shaft portion 241 and a first head portion 242. The outer peripheral surface of the first shaft portion 241 is threaded so as to be screwed into the aforementioned nut 32. The first head portion 242 is mounted to the back-side portion of the casing 23. The first head portion 242 has a diameter greater than that of the first shaft portion 241. A retainer member 246 is mounted onto the first shaft portion 241 so as to be engaged with the front-side portion of the casing 23. Thus, the retainer member 246 restricts the first optical axis adjusting screw 24 from displacing in the back-and-forth direction with respect to the casting 23.

The first head portion 242 includes a first head 243 and a first bevel gear portion 244. The first head 243 is an end of the first optical axis adjusting screw 24. The first head 243 is disposed such that the end surface thereof is oriented rearward.

As illustrated in FIG 7B, the first bevel gear portion 244 is located between the first shaft portion 241 and the first head 243. The first bevel gear portion 244 has a diameter greater than that of the first head 243. The first bevel gear portion 244 includes bevel gear teeth. When a tool (e.g., a cruciform screwdriver) is turned while being radially engaged at the tip thereof with the first bevel gear portion 244, the first optical axis adjusting screw 24 can be turned.

The second optical axis adjusting screw 25 includes a structure similar to that of the first optical axis adjusting screw 24. Thus, detailed explanation thereof will not be hereinafter made. Similarly to the first optical axis adjusting screw 24, when the second optical axis adjusting screw 25 is turned about the center axis thereof, the light emitting portion 19 is caused to pivot about the support head portion 262 and the optical axis of the light emitting portion 19 is changed right and left.

As illustrated in FIGS. 7A and 7B, the casing 23 includes a first wall portion 232. The first wall portion 232 backwardly protrudes from the rear surface of the casing 23. The first wall portion 232 is disposed so as to cover the circumference of the first head portion 242. The first wall portion 232 includes a first guide portion 233 for guiding the tool to the first head portion 242. The first guide portion 233 is composed of a cutout formed in the first wall portion 232 and a portion downwardly extending from the end of the first wall portion 232. The first guide portion 233 is located under the first head portion 242.

As illustrated in FIG 6, the casing 23 includes a second wall portion 234. The second wall portion 234 backwardly protrudes from the rear surface of the casing 23. The second wall portion 234 is disposed so as to cover the circumference of a second head portion 251 of the second optical axis adjusting screw 25. The second wall portion 234 includes a second guide portion 235 for guiding the tool to the second head portion 251. The second guide portion 235 is composed of a cutout formed in the second wall portion 234 and a portion extending rightward from the end of the second wall portion 234. The second guide portion 235 is located laterally outward of the second head portion 251.

As illustrated in FIG 5, the first head portion 242 is located between the pair of tubular bodies 111 and 112 of the front fork 11 in the vehicle width direction. The first head portion 242 is also located between the head pipe 6 and the tubular body 112, which is one of the pair of tubular bodies of the front fork 11, in the vehicle width direction. As illustrated in FIG 4, the first head portion 242 overlaps with the front fork 11 in the vehicle side view. It should be noted that the second head portion 251 (see FIG 6) of the second optical axis adjusting screw 25 is located forward of the front fork 11 in the vehicle side view, and thus, does not overlap with the front fork 11. The first head portion 242 is located over the lower bracket 114. In other words, the lower bracket 114 is located under the first head portion 242.

The lower bracket 114 includes a through hole 115 bored toward the first head portion 242. The through hole 115 penetrates through the lower bracket 114 in the up-and-down direction. The lower bracket 114 includes a thick portion 116 and a thin portion 117 having a thickness less than that of the thick portion 116. The through hole 115 penetrates through the thin portion 117. The through hole 115 penetrates through the thin portion 117 in the up-and-down direction so as to tilt with respect to a normal extending from the upper surface of the lower bracket 114. The through hole 115 is located laterally to the center of the lower bracket 114 in the vehicle width direction. The through hole 115 is located forward of the center of the lower bracket 114 in the back-and-forth direction on a cross-section including the axis of the through hole 115 among the cross-sections arranged perpendicularly to the vehicle width direction. The expression "the through hole 115 bored toward the first head portion 242" is herein used not only for meaning that the first head portion 242 is located on the extension of the through hole 115 but also for meaning that the through hole 115 is bored so as to enable the tool to reach the first head portion 242 when the tool is inserted therethrough from below at a predetermined angle.

The casing 23 includes a through hole (not illustrated in the drawings) bored through the right lateral portion thereof toward the second head portion 251 of the second optical axis adjusting screw 25.

The through hole 115 is located under the first head portion 242 and is also located under the aforementioned first guide portion 233. Thus, similarly to the first optical axis adjusting screw 24, the through hole 115 is located laterally to the center of the lower bracket 114 in the vehicle width direction. The first guide portion 233 is disposed between the through hole 115 and the first head portion 242, and guides the tool inserted through the through hole 115 to the first head portion 242. When described in detail, the through hole 115 is located under the first bevel gear portion 244.

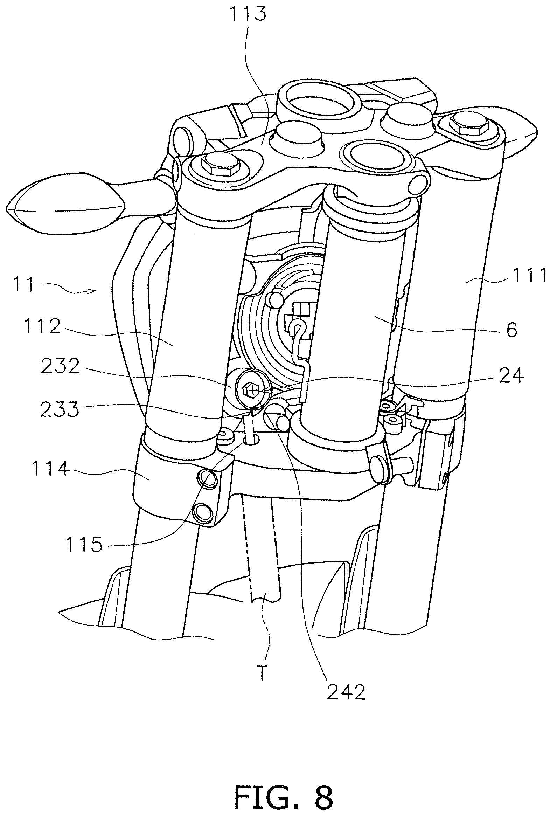

As illustrated in FIG 8, a worker, who adjusts the optical axis of the light emitting portion 19, can bring a tool T close to the first head portion 242 of the first optical axis adjusting screw 24 from below through the through hole 115 of the lower bracket 114. Under the condition, the worker can adjust the optical axis in the up-and-down direction by turning the first optical axis adjusting screw 24 with the tool T. Further, the worker can bring the tool T close to the second head portion 251 of the second optical axis adjusting screw 25 through the through hole (not illustrated in the drawings) bored through the right lateral portion of the casing 23. Under the condition, the worker can adjust the optical axis in the right-and-left direction by turning the second optical axis adjusting screw 25 with the tool T.

The saddle-ride type vehicle 1 according to the present exemplary embodiment has the following features.

The lower bracket 114 includes the through hole 115. Hence, a tool path to the first head portion 242 is produced through the through hole 115. With the structure, the tool path for adjusting the optical axis can be reliably produced even when the space on the back side of the headlight 16 is small or when components related to the headlight 16 are densely disposed.

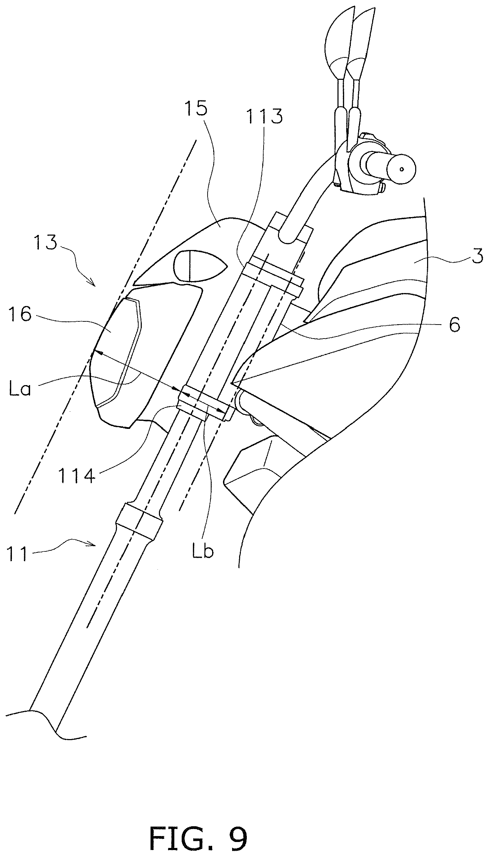

Especially in the saddle-ride type vehicle 1 according to the present exemplary embodiment, the headlight 16 is disposed adjacently to the center axis of steering shaft 10. When described in detail, the headlight 16 is disposed adjacently to the head pipe 6 such that the back-side portion of the headlight 16 is located between portions of the front fork 11. The headlight 16 is also disposed adjacently to the head pipe 6 so as to be partially located over the head pipe 6. Further, as illustrated in a vehicle side view of FIG 9, a relation "La < 2Lb" is established, where La is defined as the distance between the front end edge of the lower bracket 114 and a tangent that touches the front surface of the headlight 16 and extends in parallel to the tilting direction of the front fork 11, and Lb is defined as the distance between the front end edge of the lower bracket 114 and the center axis of the steering shaft 10. When the headlight 16 is thus disposed adjacently to the center axis of the steering shaft 10, it is not easy to reliably produce a tool path on the rearward of the headlight 16. Further, the first head portion 242 herein overlaps with the front fork 11 in the vehicle side view. Thus, it is difficult to bring a tool close to the first head portion 242 from a lateral side.

However, in the saddle-ride type vehicle 1 according to the present exemplary embodiment, the optical axis is easily adjustable by bringing a tool close to the first head portion 242 from below through the through hole 115 of the lower bracket 114. Therefore, brisk handling can be enhanced, and a tool path for adjusting the optical axis can be reliably produced.

Further, the present invention is particularly useful in such a structure, as illustrated in FIG 4, that a through hole cannot be bored in the casing 23 because the first head portion 242 overlaps with the tubular body 112 of the front fork 11 in a side view.

The through hole 115 is bored in the lower bracket 114. With the structure, it is possible to make the through hole 115 less stand out in the appearance of the saddle-ride type vehicle 1.

The through hole 115 is located laterally to the center of the lower bracket 114 in the vehicle width direction. Thus, the through hole 115 is more easily accessible than that bored in the center of the lower bracket 114 in the vehicle width direction. In other words, a tool can be easily inserted through the through hole 115. The tool can be thereby easily brought close to the first head portion 242.

The through hole 115 is bored through the thin portion 117 of the lower bracket 114. Thus, even in the structure that the lower bracket 114 includes the through hole 115, it is possible to inhibit the through hole 115 from negatively affecting the strength of the thick portion 116. In other words, it is possible to inhibit degradation in strength of the lower bracket 114.

The first guide portion 233 is disposed between the through hole 115 and the first head portion 242 in order to guide a tool inserted through the through hole 115 to the first head portion 242. Thus, the tool is guided by the first guide portion 233 and can be easily brought close to the first head portion 242.

One exemplary embodiment of the present invention has been explained above. However, the present invention is not limited to the aforementioned exemplary embodiment, and a variety of changes can be made without departing from the scope of the present invention.

The saddle-ride type vehicle 1 is not limited to the motorcycle, and may be an all-terrain vehicle or a snowmobile.

The first optical axis adjusting screw 24 may be configured to adjust the optical axis of the light emitting portion 19 right and left. The position of the first optical axis adjusting screw 24 is not limited to that described in the aforementioned exemplary embodiment. For example, the first optical axis adjusting screw 24 may be disposed rightward of the center axis Ax1 of the headlight bulb 21. Further or alternatively, the first optical axis adjusting screw 24 may be disposed higher than the center axis Ax1 of the headlight bulb 21.

As illustrated in FIG 7A, a groove 245 may be formed on the end surface of the first head 243 so as to enable a tool to be fitted thereto. In this case, the first optical axis adjusting screw 24 can be turned by turning the tool that the tip thereof is fitted to the groove 245 from rear. It should be noted that the tool is required to be brought close to the end surface of the first head 243 while the handlebar 14 is being turned to the right. Hence, compared to this, the optical axis is more easily adjustable when the tool is brought close to the first head portion 242 through the through hole 115 while the handlebar 14 is kept straight without being turned.

The arrangement of the through hole 115 is not limited to that of the aforementioned exemplary embodiment. For example, the through hole 115 may not be bored in the up-and-down direction, and may be bored in a direction tilting with respect to the up-and-down direction. Alternatively, the through hole 115 may be bored through the lower bracket 114 in another direction. Yet alternatively, the through hole 115 may not be bored in the lower bracket 114, and may be bored in the upper bracket 113.

The through hole 115 may be bored in the center of the lower bracket 114 in the vehicle width direction. Further or alternatively, the through hole 115 may be disposed rearward of the center of the lower bracket 114. The through hole 115 may not be bored in the thin portion 117 of the lower bracket 114, and may be bored in another portion.

The first head portion 242 may be disposed so as not to overlap with the front fork 11. The back-side portion of the headlight 16 may not be located between portions of the front fork 11. Further or alternatively, the headlight 16 may not be located over the head pipe 6. In FIG 9, the relation "La < 2Lb" may not be satisfied.

The position of the first guide portion 233 is not limited to that described in the aforementioned exemplary embodiment, and may be another position. Further, the first guide portion 233 may be composed of only a cutout or a hole. Alternatively, the first guide portion 233 may be provided separately from the first wall portion 232. Yet alternatively, the first guide portion 233 may not be provided.

For the purpose of adjusting the optical axis, the first optical axis adjusting screw may be configured to cause only one of the headlight bulb and the reflector to pivot without being configured to cause both of them to pivot.

## Claims

1. A saddle-ride type vehicle (1), comprising:
a frame (2) including a head pipe (6);
a steering shaft (10) being rotatably supported by the head pipe (6);
a front fork (11) being coupled to the steering shaft (10) and including a pair of tubular bodies (111, 112) and a bracket (114) coupling the pair of tubular bodies (111, 112);
a front wheel (12) being rotatably supported by the front fork (11); and
a headlight (16) including a light emitting portion (19) and an optical axis adjusting screw (24) for adjusting an optical axis of the light emitting portion (19), wherein
the optical axis adjusting screw (24) includes a head portion (242) disposed on a back-side portion of the headlight (16), **characterised in that**
the headlight is supported by the front fork (11) and the bracket (114) includes a through hole (115) bored toward the head portion (242) of the optical axis adjusting screw (24) so as to produce a tool path extending to the head portion of the optical axis adjusting screw through the through hole (115) of the bracket (114).

2. The saddle-ride type vehicle (1) according to claim 1, wherein the head portion (242) of the optical axis adjusting screw (24) overlaps with the front fork (11) in a vehicle side view.

3. The saddle-ride type vehicle (1) according to claim 1 or 2, wherein the through hole (115) is located laterally to a center of the bracket (114) in a vehicle width direction.

4. The saddle-ride type vehicle (1) according to any of claims 1 to 3, wherein the through hole (115) is located forward of a center of the bracket (114) on a cross-section including an axis of the through hole (115) among cross-sections arranged perpendicularly to the vehicle width direction.

5. The saddle-ride type vehicle (1) according to any of claims 1 to 4, wherein the bracket (114) includes a thick portion (116) and a thin portion (117) having a thickness less than a thickness of the thick portion (116).

6. The saddle-ride type vehicle (1) according to claim 5, wherein the through hole (115) penetrates through the thin portion (117).

7. The saddle-ride type vehicle (1) according to any of claims 1 to 6, further comprising:
a fuel tank (3) being disposed rearward of the head pipe (6).

8. The saddle-ride type vehicle (1) according to any of claims 1 to 7, wherein the headlight (16) is disposed adjacently to the head pipe (6) such that the back-side portion of the headlight (16) is located between portions of the front fork (11).

9. The saddle-ride type vehicle (1) according to any of claims 1 to 8, wherein
the steering shaft (10) is disposed so as to tilt such that the upper portion thereof is located rearward of the lower portion thereof, and
the headlight (16) is disposed adjacently to the steering shaft (10) such that the headlight (16) is at least partially located over the steering shaft (10).

10. The saddle-ride type vehicle (1) according to any of claims 1 to 9, wherein a relation La < 2Lb is established where in the vehicle side view, La is defined as a distance between a front end edge of the bracket (114) and a tangent that touches a front surface of the headlight (16) and extends in parallel to a tilting direction of the front fork (11), and Lb is defined as a distance between the front end edge of the bracket (114) and a center axis of the steering shaft (10).

11. The saddle-ride type vehicle (1) according to any of claims 1 to 10, wherein the headlight (16) includes a guide portion (233) for guiding a tool (T) inserted through the through hole (115) to the head portion (242).

12. The saddle-ride type vehicle (1) according to claim 11, wherein the guide portion (233) is disposed between the through hole and the head portion (242).

13. The saddle-ride type vehicle (1) according to any one of claims 1 to 12, wherein
the front fork (11) includes
an upper bracket (113) coupling the pair of tubular bodies (111, 112), and
a lower bracket (114) coupling the pair of tubular bodies (111, 112) and being disposed lower than the upper bracket (113), and
the bracket (114) including the through hole (115) is the lower bracket (114).

14. The saddle-ride type vehicle (1) according to claim 13, wherein
the lower bracket (114) is located under the head portion (242) of the optical axis adjusting screw (24), and
the through hole (115) penetrates through the lower bracket (114) in an up-and-down direction.

15. The saddle-ride type vehicle (1) according to claim 14, wherein
the steering shaft (10) is disposed so as to tilt such that an upper portion thereof is located rearward of a lower portion thereof,
the lower bracket (114) is disposed such that a normal extending from an upper surface of the lower bracket (114) is oriented in the tilting direction of the steering shaft (10), and
the through hole (115) penetrates through the lower bracket (114) in the up-and-down direction so as to tilt with respect to the normal extending from the upper surface of the lower bracket (114).

## Patentansprüche

1. Spreizsitz-Fahrzeug (1), das umfasst:
einen Rahmen (2), der ein Steuerkopfrohr (6) enthält;
eine Lenkwelle (10), die über das Steuerkopfrohr (6) drehbar gelagert ist;
eine Vorderradgabel (11), die mit der Lenkwelle (10) verbunden ist und ein Paar röhrenförmiger Körper (111, 112) sowie einen Halter (14) enthält, der die paarigen röhrenförmigen Körper (111, 112) verbindet;
ein Vorderrad (12), das über die Vorderradgabel (11) drehbar gelagert ist; und
einen Scheinwerfer (16), der einen lichtemittierenden Abschnitt (19) sowie eine Schraube (24) zum Einstellen einer optischen Achse enthält, mit der eine optische Achse des lichtemittierenden Abschnitts (19) eingestellt wird, wobei
die Schraube (24) zum Einstellen einer optischen Achse einen Kopfabschnitt (242) enthält, der an einem Rückseiten-Abschnitt des Scheinwerfers (16) angeordnet ist, **dadurch gekennzeichnet, dass**
der Scheinwerfer von der Vorderradgabel (11) getragen wird und der Halter (114) ein Durchgangsloch (115) enthält, das so auf den Kopfabschnitt (242) der Schraube (24) zum Einstellen einer optischen Achse zu gebohrt ist, dass ein Werkzeug-Weg erzeugt wird, der über das Durchgangsloch (115) des Halters (114) zu dem Kopfabschnitt der Schraube zum Einstellen einer optischen Achse verläuft.

2. Spreizsitz-Fahrzeug (1) nach Anspruch 1, wobei sich der Kopfabschnitt (242) der Schraube (24) zum Einstellen einer optischen Achse, in einer Seitenansicht des Fahrzeugs, mit der Vorderradgabel (11) überlappt.

3. Spreizsitz-Fahrzeug (1) nach Anspruch 1 oder 2, wobei das Durchgangsloch (115), in einer Fahrzeug-Breitenrichtung, seitlich von einer Mitte des Halters (114) positioniert ist.

4. Spreizsitz-Fahrzeug (1) nach einem der Ansprüche 1 bis 3, wobei das Durchgangsloch (115), von Querschnitten, die senkrecht zu der Fahrzeug-Breitenrichtung angeordnet sind, in einem Querschnitt, der eine Achse des Durchgangslochs (115) einschließt, vor einer Mitte des Halters (114) positioniert ist.

5. Spreizsitz-Fahrzeug (1) nach einem der Ansprüche 1 bis 4, wobei der Halter (114) einen dicken Abschnitt (116) und einen dünnen Abschnitt (117) enthält, dessen Dicke kleiner ist als eine Dicke des dicken Abschnitts (116).

6. Spreizsitz-Fahrzeug (1) nach Anspruch 5, wobei das Durchgangsloch (115) durch den dünnen Abschnitt (117) hindurch verläuft.

7. Spreizsitz-Fahrzeug (1) nach einem der Ansprüche 1 bis 6, das des Weiteren umfasst:
einen Kraftstofftank (3), der sich hinter dem Steuerkopfrohr (6) befindet.

8. Spreizsitz-Fahrzeug (1) nach einem der Ansprüche 1 bis 7, wobei der Scheinwerfer (16) an das Steuerkopfrohr (6) angrenzend so angeordnet ist, dass der Rückseiten-Abschnitt des Scheinwerfers (16) zwischen Abschnitten der Vorderradgabel (11) positioniert ist.

9. Spreizsitz-Fahrzeug (1) nach einem der Ansprüche 1 bis 8, wobei
die Lenkwelle (10) so angeordnet ist, dass sie so geneigt ist, dass ihr oberer Abschnitt hinter ihrem unteren Abschnitt positioniert ist, und
der Scheinwerfer (16) an die Lenkwelle (10) angrenzend so angeordnet ist, dass der Scheinwerfer (16) wenigstens teilweise über der Lenkwelle (10) positioniert ist.

10. Spreizsitz-Fahrzeug (1) nach einem der Ansprüche 1 bis 9, wobei eine Beziehung La < 2Lb gilt, und dabei, in der Fahrzeug-Seitenansicht, La als ein Abstand zwischen einer Vorderenden-Kante des Halters (114) und einer Tangente definiert ist, die eine vordere Fläche des Scheinwerfers (16) berührt und parallel zu einer Neigungsrichtung der Vorderradgabel (11) verläuft, und Lb als ein Abstand zwischen der Vorderenden-Kante des Halters (114) und einer Mittelachse der Lenkwelle (10) definiert ist.

11. Spreizsitz-Fahrzeug (1) nach einem der Ansprüche 1 bis 10, wobei der Scheinwerfer (16) einen Führungsabschnitt (233) enthält, mit dem ein über das Durchgangsloch (115) eingeführtes Werkzeug (T) zu dem Kopfabschnitt (242) geführt wird.

12. Spreizsitz-Fahrzeug (1) nach Anspruch 11, wobei der Führungsabschnitt (233) zwischen dem Durchgangsloch und dem Kopfabschnitt (242) angeordnet ist.

13. Spreizsitz-Fahrzeug (1) nach einem der Ansprüche 1 bis 12, wobei die Vorderradgabel (11) enthält:
einen oberen Halter (113), der die paarigen röhrenförmigen Körper (111, 112) verbindet, sowie
einen unteren Halter (114), der die paarigen röhrenförmigen Körper (111, 112) verbindet und tiefer angeordnet ist als der obere Halter (113), und
der Halter (114), der das Durchgangsloch (115) enthält, der untere Halter (114) ist.

14. Spreizsitz-Fahrzeug (1) nach Anspruch 13, wobei
der untere Halter (114) unter dem Kopfabschnitt (242) der Schraube (24) zum Einstellen einer optischen Achse positioniert ist, und
das Durchgangsloch (115) in einer vertikalen Richtung durch den unteren Halter (114) hindurch verläuft.

15. Spreizsitz-Fahrzeug (1) nach Anspruch 14, wobei
die Lenkwelle (10) so angeordnet ist, dass sie so geneigt ist, dass ihr oberer Abschnitt hinter ihrem unteren Abschnitt positioniert ist, und
der untere Halter (114) so angeordnet ist, dass eine Normale, die sich von einer oberen Fläche des unteren Halters (114) aus erstreckt, in der Neigungsrichtung der Lenkwelle (10) ausgerichtet ist, und
das Durchgangsloch (115) in der vertikalen Richtung so durch den unteren Halter (114) hindurch verläuft, dass es in Bezug auf die Normale geneigt ist, die sich von der oberen Fläche des unteren Halters (114) aus erstreckt.

## Revendications

1. Véhicule de type à selle (1) comprenant :
un châssis (2) incluant un tube de tête (6) ;
un arbre de direction (10) supporté de façon rotative par le tube de tête (6) ;
une fourche avant (11) couplée à l'arbre de direction (10) et incluant une paire de corps tubulaires (111, 112) et un support (114) qui couple la paire de corps tubulaires (111, 112) ;
une roue avant (12) supportée de manière rotative par la fourche avant (11) ; et
un phare (16) incluant une portion d'émission de lumière (19) et une vis d'ajustement d'axe optique (24) pour ajuster un axe optique de la portion d'émission de lumière (19), dans lequel
la vis d'ajustement d'axe optique (24) comprend une portion de tête (242) disposée sur une portion du côté arrière du phare (16),
**caractérisé en ce que** le phare est supporté par la fourche avant (11) et le support (114) inclut un trou traversant (115) percé vers la portion de tête (242) de la vis d'ajustement d'axe optique (24) de manière à produire une trajectoire d'outil qui s'étend jusqu'à la portion de tête de la vis d'ajustement d'axe optique à travers le trou traversant (115) du support (114).

2. Véhicule de type à selle (1) selon la revendication 1, dans lequel la portion de tête (242) de la vis d'ajustement d'axe optique (24) chevauche la fourche avant (11) dans une vue de côté du véhicule.

3. Véhicule de type à selle (1) selon la revendication 1 ou 2, dans lequel le trou traversant (115) est positionné latéralement par rapport à un centre du support (114) en direction de la largeur du véhicule.

4. Véhicule de type à selle (1) selon l'une quelconque des revendications 1 à 3, dans lequel le trou traversant (115) est positionné devant un centre du support (114) sur une section transversale incluant un axe du trou traversant (115) parmi des sections transversales agencées perpendiculairement à la direction de la largeur du véhicule.

5. Véhicule de type à selle (1) selon l'une quelconque des revendications 1 à 4, dans lequel le support (114) inclut une portion épaisse (116) et une portion mince (117) présentant une épaisseur inférieure à l'épaisseur de la portion épaisse (116).

6. Véhicule de type à selle (1) selon la revendication 5, dans lequel le trou traversant (115) traverse la portion mince (117).

7. Véhicule de type à selle (1) selon l'une quelconque des revendications 1 à 6, comprenant en outre :
un réservoir de carburant (3) disposé derrière le tube de tête (6).

8. Véhicule de type à selle (1) selon l'une quelconque des revendications 1 à 7, dans lequel le phare (16) est disposé de manière adjacente au tube de tête (6) de telle sorte que la portion du côté arrière du phare (16) est positionnée entre des portions de la fourche avant (11).

9. Véhicule de type à selle (1) selon l'une quelconque des revendications 1 à 8, dans lequel
l'arbre de direction (10) est disposé de manière à s'incliner de telle sorte que sa portion supérieure est positionnée derrière sa portion inférieure, et
le phare (16) est disposé de manière adjacente à l'arbre de direction (10) de telle sorte que le phare (16) est positionné au moins partiellement au-dessus de l'arbre de direction (10).

10. Véhicule de type à selle (1) selon l'une quelconque des revendications 1 à 9, dans lequel une relation La < 2Lb est établie où, en vue de côté du véhicule, La est défini comme la distance entre un bord d'extrémité avant du support (114) et une tangente qui touche une surface avant du phare (16) et s'étend parallèlement à une direction d'inclinaison de la fourche avant (11), et Lb est défini comme la distance entre le bord d'extrémité avant du support (114) et un axe central de l'arbre de direction (10).

11. Véhicule de type à selle (1) selon l'une quelconque des revendications 1 à 10, dans lequel le phare (16) inclut une portion guide (233) pour guider un outil (T) inséré dans le trou traversant (115) de la portion de tête (242).

12. Véhicule de type à selle (1) selon la revendication 11, dans lequel la portion guide (233) est disposée entre le trou traversant et la portion de tête (242).

13. Véhicule de type à selle (1) selon l'une quelconque des revendications 1 à 12, dans lequel la fourche avant (11) inclut
un support supérieur (113) qui couple la paire de corps tubulaires (111, 112), et
un support inférieur (114) qui couple la paire de corps tubulaires (111, 112) et disposé plus bas que le support supérieur (113), et
dans lequel le support (114) incluant le trou traversant (115) est le support inférieur (114).

14. Véhicule de type à selle (1) selon la revendication 13, dans lequel
le support inférieur (114) est positionné sous la portion de tête (242) de la vis d'ajustement d'axe optique (24), et
le trou traversant (115) traverse le support inférieur (114) en direction haut-bas.

15. Véhicule de type à selle (1) selon la revendication 14, dans lequel
l'arbre de direction (10) est disposé de manière à s'incliner de telle sorte que sa portion supérieure est positionnée derrière sa portion inférieure,
le support inférieur (114) est disposé de telle sorte qu'une normale qui s'étend depuis une surface supérieure du support inférieur (114) est orientée en direction d'inclinaison de l'arbre de direction (10), et
le trou traversant (115) traverse le support inférieur (114) en direction haut-bas de manière à s'incliner par rapport à la normale qui s'étend depuis la surface supérieure du support inférieur (114).
